# EUROPEAN PATENT SPECIFICATION

(11) **EP 4 264 893 B1**
(45) Date of publication and mention of the grant of the patent: **08.10.2025**
(21) Application number: 20966104.0
(22) Date of filing: 18.12.2020
(51) Int. Cl.: H04B 7/06, H04B 7/0404, H04L 5/00, H04L 25/02

(54) **CONTROLLING TRANSMISSON OF REFERENCE SIGNALS**
STEUERUNG DER ÜBERTRAGUNG VON REFERENZSIGNALEN
COMMANDE D'ÉMISSION DE SIGNAUX DE RÉFÉRENCE

(43) Date of publication of application: 25.10.2023
(73) Proprietor: Telefonaktiebolaget LM Ericsson (publ), 164 83 Stockholm (SE)
(72) Inventor: JALDÉN, Niklas, 749 42 ENKÖPING (SE); MOHAMAD, Medhat, 164 38 KISTA (SE); NILSSON, Andreas, 413 13 GÖTEBORG (SE)
(74) Representative: Ericsson
(86) International application number: PCT/SE2020/051235
(87) International publication number: WO 2022/131980

(56) References cited:
- WO-A1-2020/020285
- US-A1- 2012 039 273
- US-A1- 2013 107 746
- US-A1- 2014 219 199
- US-A1- 2019 013 909
- US-A1- 2019 074 870
- US-A1- 2020 304 262

## Description

### TECHNICAL FIELD

The present disclosure relates to methods of controlling sending of reference signals from a wireless communication device to a radio base station, as well as a wireless communication device and a radio base station performing the methods.

### BACKGROUND

Current and future wireless communications systems such as for instance 5^{th} generation (5G) New Radio (NR) and 4^{th} generation advanced Long Term Evolution (LTE) are expected to provide ubiquitous high data-rate coverage. Achieving this requires an efficient use of available system resources. For example, a higher number of antenna elements on both transmitter and receiver side are considered in future standards of LTE and NR.

With multiple antennas at the transmitter and/or the receiver, it is possible to exploit the spatial degrees of freedom offered by multipath fading inside a communication channel in order to provide a substantial increase in the data rates and reliability of wireless transmission. In the downlink, there are three basic approaches for utilizing the antenna: diversity, multiplexing and beamforming.

In order to control transmission of data using for instance beamforming or multiplexing of the data to each specific user, the transmitter needs information about the channel over which the data is transmitted, so-called channel state information (CSI). Typically, the transmitter being e.g. a radio base station relies on extensive reporting from the receiver being e.g. a smartphone.

Relevant prior art is to be found in US 2019/074870 A1.

### SUMMARY

One objective is to solve, or at least mitigate, this problem in the art, and to provide an improved method of a radio base station of controlling sending of reference signals from a wireless communication device.

This objective is attained by the method of a radio base station according to claim 1 and a radio base station according to claim 8.

Advantageously, by determining characteristics of communication channels established via antennas of a wireless communication device, it is possible for a radio base station to determine a sequence in which reference signals, e.g. so-called Sounding Reference Signals (SRSs), are to be sent by the wireless communication device.

For instance, in an embodiment, the radio base station determines that the characteristics of two channels are similar, in which case it is sufficient for the wireless communication device to send the SRS on only one of the two channels, at least for a time period, and the radio base station will instruct the wireless communication device accordingly.

In another embodiment, the radio base station determines that the quality of one channel is low while the quality of another channel is high, in which case an SRS should be sent over the high-quality channel, but not over the low-quality channel (at least for a time period), and the radio base station will instruct the wireless communication device accordingly.

Further embodiments will be described in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 shows a wireless communications network in which embodiments may be implemented;
Figure 2 shows a signalling diagram illustrating a method of a radio base station controlling transmission of reference signals from a wireless communication device according to an embodiment;
Figure 3a illustrates a prior art scenario where reference signals are sent in a sequence from a wireless communication device to a radio base station;
Figure 3b illustrates a sequence of reference signals being sent from a wireless communication device to a radio base station according to an embodiment;
Figure 3c illustrates a sequence of reference signals being sent from a wireless communication device to a radio base station according to another embodiment;
Figure 3d illustrates a sequence of reference signals being sent from a wireless communication device to a radio base station according to a further embodiment;
Figure 3e illustrates a sequence of reference signals being sent from a wireless communication device to a radio base station according to yet a further embodiment;
Figure 4 shows a signalling diagram illustrating a method of a radio base station controlling transmission of reference signals from a wireless communication device according to an embodiment;
Figure 5 shows a signalling diagram illustrating a method of a radio base station controlling transmission of reference signals from a wireless communication device according to another embodiment;
Figure 6 shows a signalling diagram illustrating a method of a radio base station controlling transmission of reference signals from a wireless communication device according to a further embodiment;
Figure 7 shows a signalling diagram illustrating a method of a radio base station controlling transmission of reference signals from a wireless communication device according to yet an embodiment;
Figure 8 shows a radio base station according to an embodiment; and
Figure 9 shows a wireless communication device according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

For a wireless communication device comprising a plurality of antennas, such as e.g. a smart phone or a tablet, the radio base station must be able to estimate a characteristic of a downlink (DL) channel established which each antenna in order to correctly select a DL channel configuration in terms of assign resources to the DL channel, for instance selecting DL signal transmission power, assigned bandwidth, selected antenna beamforming, etc. In the following, the wireless communication device will be referred to as User Equipment (UE).

In order for the RBS to be able to estimate the communication channel characteristics, the UE may be instructed to (periodically or aperiodically) send an uplink (UL) reference signal via each antenna or a subset of the antennas based on which the RBS can estimate the respective channel characteristic upon receiving the reference signal. For instance, from the reference signals, the RBS may estimate signal-to-interference-plus-noise ratio (SINR), attenuation, phase-shift, noise, etc., of the channel.

This reference signal is commonly referred to as a Sounding Reference Signal (SRS), which in the following will be used to embody the reference signal from which the RBS estimates channel characteristics, even though other signals may be envisaged.

Now, some of the downsides of continuously transmitting SRSs to the RBS in the UL is, i.a., that battery power is consumed at the UE, bandwidth is used for the SRSs, and the SRSs may cause interference.

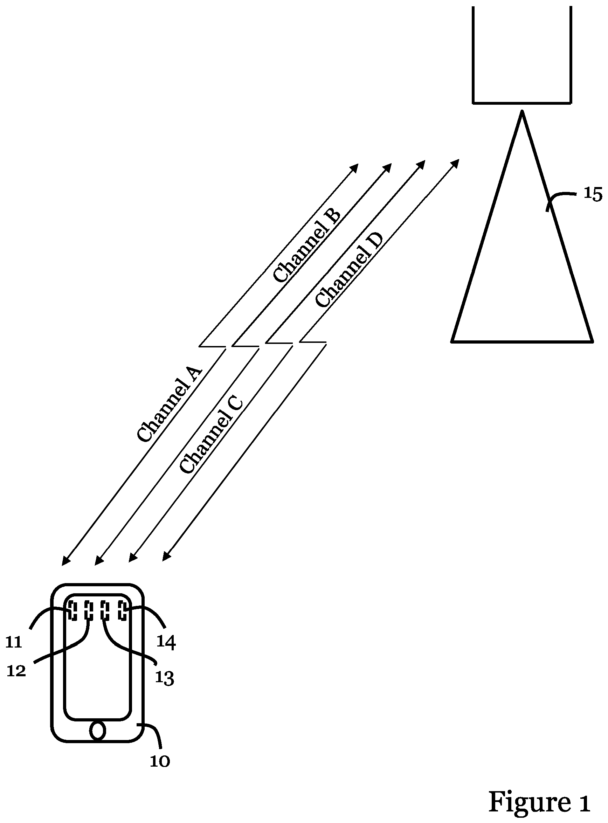

Figure 1 schematically illustrates a UE 10 in the form of a smartphone being equipped with four antennas 11, 12, 13, 14 communicating with an RBS 15.

In a straightforward SRS signalling scheme, a round-robin approach may be utilized where first antenna 11 transmits an SRS via channel A, thereafter second antenna 12 transmits an SRS via channel B, followed by third antenna 13 transmitting an SRS via channel C and finally fourth antenna 14 transmits an SRS via channel D. After some time, the process is repeated. The UE 10 may be preconfigured with data determining periodicity for transmitting the SRSs.

Alternatively, an SRS may be transmitted on each antenna 11-14 simultaneously, if the UE 10 is capable of performing such multi-antenna transmission.

Oftentimes UEs are capable of receiving data on multiple antennas simultaneously, but only capable of transmitting data over one or a couple of antennas at a time.

From the SRS received from each UE antenna 11-14, the RBS 15 estimates the channel characteristics for the corresponding channel A, B, C, D.

In another scenario, the UE 10 will not transmit the SRS via all four antennas 11-14 in a round-robin sequence, but occasionally send an SRS via one or more selected antennas. This may occur upon receiving an instruction from the RBS 15 to transmit an SRS over a particular antenna. However, the RBS 15 will only be able to estimate the characteristics of the channel for which an SRS is transmitted.

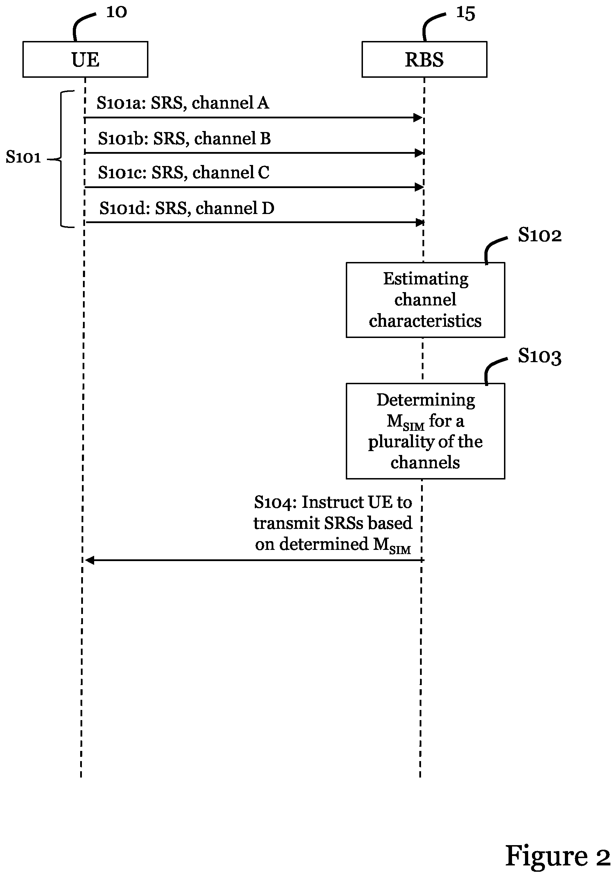

Figure 2 shows a signalling diagram illustrating a method of the RBS 15 controlling transmission of SRSs from the UE 10 according to an embodiment.

In a first step S101, the RBS 15 receives an SRS from each antenna 11-14, based on which received SRS the RBS 15 in step S102 estimates characteristics of the communication channel A, B, C, D established via the respective antenna 11-14.

In step S103, the RBS 15 determines a measure of similarity M_{SIM} in the estimated communication channel characteristic of at least two of the plurality of antennas. For instance, the RBS 15 may determine that the characteristics of channel A established via the first antenna 11 is similar to the characteristics of channel B established via the second antenna 12.

For example, it may be envisaged that if two channels have identical channel characteristics, M_{SIM} is 1, while if two channels have no similarities M_{SIM} is 0.

In this exemplifying embodiment, it is assumed that the characteristics of channel A and channel B has a similarity measure of M_{SIMAB} = 0.9, and that the similarity in characteristics of channel C via the third antenna 13 and channel D via the fourth antenna 14 also is high, in this M_{SIMCD} = 0.88. The RBS 15 further determines that the similarity measure for channels A and C is low.

Further, it is assumed that in case the determined similarity measure M_{SIM} exceeds a predetermined similarity threshold vale T_{SIM}, the characteristics of the corresponding channels are considered sufficiently similar. For instance, T_{SIM} = 0.8, wherein two or more channel characteristics are considered sufficiently similar if T_{SIM} > 0.8, which is the case for channels A-B and C-D, respectively. In contrast, should M_{SIMCD} = 0.7, the RBS 15 would not have considered the characteristics of channels C and D to be sufficiently similar.

From these determined similarity measures, the RBS 15 concludes that the characteristics of channels A-B are similar, as are the characteristics of channels C-D, while there is little similarity between any one of channels A-B compared to any one of channels C-D.

The RBS 15 will apply this conclusion by instructing the UE 10 in step S104 to send an SRS either on channel A-B (but not both), and either on channel C-D (but not both), at least for a given time period.

Thus, if the UE 10 is instructed to send an SRS on channel A (but not on channel B), the RBS 15 will use that SRS to estimate the channel characteristics of channel A as well as channel B, since the RBS 15 estimated in S102 that these characteristics are highly similar, i.e. M_{SIMAB} = 0.9.

Similarly, if the UE 10 is instructed to send an SRS on channel C (but not on channel D), the RBS 15 will use that SRS to estimate the channel characteristics of channel C as well as channel D, since the RBS 15 estimated in S102 that these characteristics are highly similar, i.e. M_{SIMCD} = 0.88.

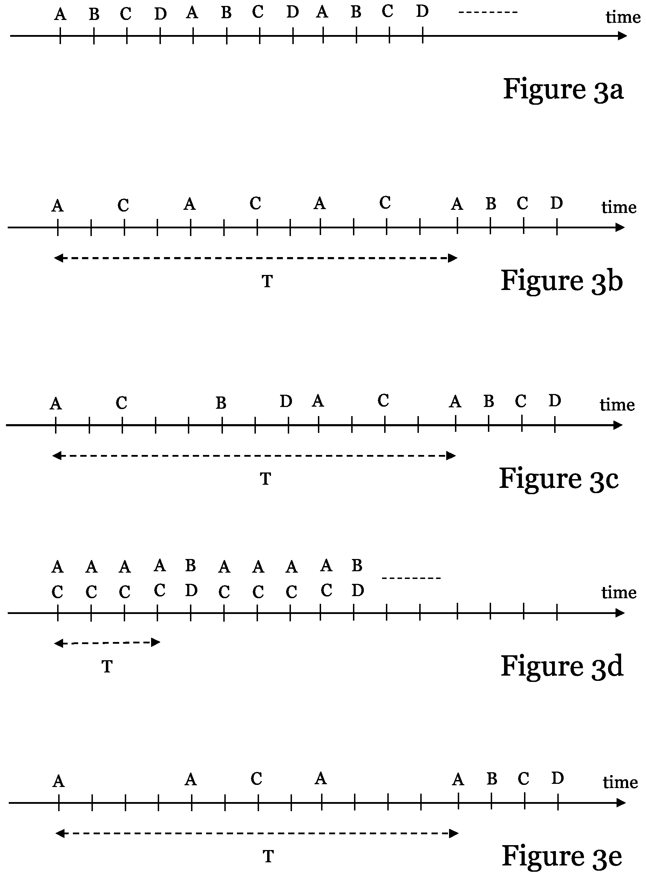

Now, with reference to Figure 3a, as compared to a round-robin approach where the UE 10 transmits the SRS in the following sequence:
A-B-C-D-A-B-C-D-A-B....,

the UE 10 may instead in this embodiment be instructed by the RBS 15 in step S104 to send the SRS in sequence:
A-C-A-C-A-C....

If the SRS is sent via channel A and channel C with the same periodicity as the prior art round-robin approach, as shown in Figure 3b, the UE 10 will send half as many SRSs during time period T while the RBS 15 still will be able to estimate channel characteristics of all four channels A-D, which advantageously will consume less UE battery power.

As is understood, as shown in Figure 3b, the UE 10 may occasionally (i.e. after the time period T) send an SRS over channels B and D such that the RBS 15 may estimate the respective channel characteristics to ensure that the previously determined similarity measures still hold before reverting to again only sending the SRS on channels A and C as performed during time period T, i.e. A-C-A-C and so on. It should further be noted that the timing for sending an SRS is exemplifying only. It may for instance be envisaged that an SRS is sent as often as in the case of Figure 3a, resulting in the RBS 15 being able to estimate the channel characteristics more often, hence providing a better overall level of channel information.

If the determined similarity measure no longer indicates that there is sufficient similarity between the channels as discussed hereinabove, the process will have to be repeated where new similarity measures are determined.

Figure 3c illustrates another example where the RBS 15 instructs the UE 10 in step S104 to first sent the SRSs on channels A and C (but not on channels B and D) and in the next round the SRSs are sent on channels B and D (but not on channels A and C). Again, as compared to the prior art round-robin approach, half as many SRSs are sent during time period T.

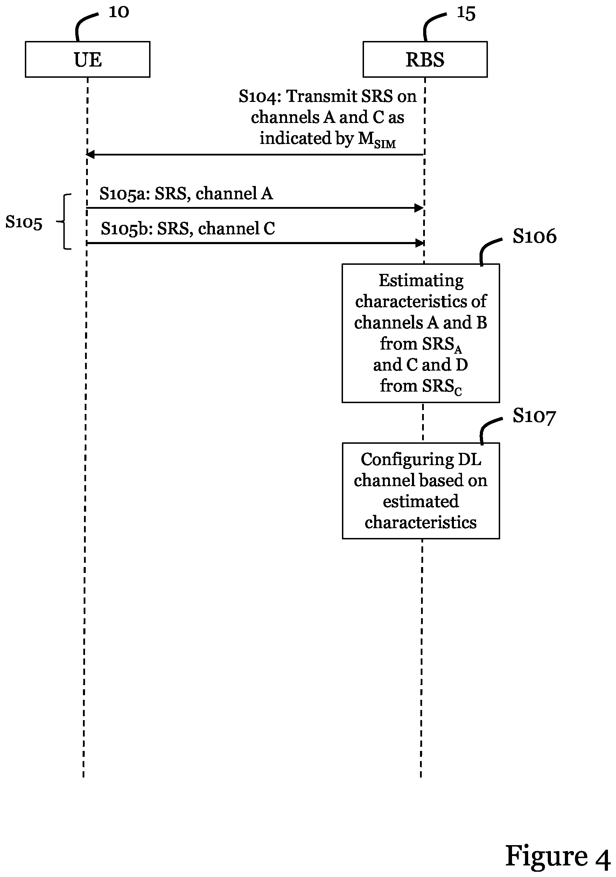

Figure 4 illustrates a signalling diagram according to an embodiment where the instructing of the UE 10 in step S104 is to send an SRS only for one of the two channels in the respective pair of channels having a high M_{SIM}.

Hence, in line with the embodiment illustrated in Figure 3b, the RBS 15 instructs the UE 10 in S104 to send SRSs only on channels A and C, at least for a given time period T.

The UE 10 responds in step S105 by sending an SRS on channel A in S105a (SRS_{A}) and on channel C in S105b (SRSc).

Upon receiving the two reference signals SRS_{A} and SRSc in step S105, the RBS determines in step S106 the channel characteristics of channels A and B from SRS_{A} and the channel characteristics of channels C and D from SRSc.

Further, in this example, since the RBS 15 is aware of the channel characteristics of channel A and that there is a great similarity in characteristics between channels A and B, the RBS 15 may select a particular DL configuration for channel A in step S107 and further apply that DL configuration also to channel B.

In other words, not only is a decreased battery consumption attained at the UE 10 since fewer SRSs are sent, but the selection of DL channel configuration is further advantageously simplified at the RBS 15. For instance, the RBS 15 may determine that the experienced SINR at the UE 10 is more or less identical for channels A and B, and the RBS 15 hence will select the same DL transmission power level for channels A and B only by estimating the channel characteristics of channel A.

Further, even in a scenario where SRSs would be sent as often as in the round-robin case of Figure 3a but on fewer channels, the performance is improved since the channel estimation can be performed more often resulting in more information as regards the channel characteristics and consequently more information on which to base the determining of the SRS sequence. For instance, since channels A and B are highly correlated in this example, the RBS 15 may conclude that a DL configuration in the form of beamforming weights determined for channel A also can be applied to channel B, and in practice a precoder configuration can be determined based on channel A only. It can thus be assumed that the UE can receive the data transmitted with that precoder over both channels A and B and hence attain receiver combining gain of 3 dB. Other envisaged DL configurations to determine include modulation and coding scheme (MCS) and rank indication (RI).

Figure 3d illustrates another example where the RBS 15 instructs the UE 10 in step S104 to send the SRSs simultaneously on channels A and C (but not on channels B and D) for four rounds before sending the SRSs simultaneously on channels B and D once (but not on channels A and C), and thereafter again sending the SRSs simultaneously on channels A and C for four rounds. Hence, as is understood, the SRSs may be sent on multiple channels simultaneously.

It may further be envisaged that in certain scenarios, for instance when applying antenna switching, the UE 10 is not allowed to send SRSs via all antennas 11-14 simultaneously, but may only be allowed to transmit two SRSs simultaneously. In such scenario, the above described embodiment is particularly advantageous since only two out of four antennas (first antenna 11 and third antenna 13) are activated for SRS transmission via channels A and C during time period T.

The channel characteristics to be estimated may be embodied in the form of so-called channel state information (CSI) describing how a signal propagates from the UE 10 to the RBS 15 and represents a combined effect of e.g. scattering, fading, power attenuation with distance, etc.

The measure of similarity to be determined for the channel characteristics may be embodied in the form of covariance between one or more particular characteristics, where a high degree of covariance indicates great similarity.

The RBS 15 may send the instructions to the UE 10 to send the SRS in a particular order via e.g. Radio Resource Control (RRC) signalling, and/or Medium Access Control (MAC) Control Element (CE) and/or Downlink Control Information (DCI) element.

In an embodiment, channel quality in terms of e.g. channel gain or attenuation is particularly taken into account. If the RBS 15 concludes in step S102 that the quality of channel A is better than that of channel C in terms of signal strength, the RBS 15 will instruct the UE 10 in step S104 to send the SRS on channel A more often than on channel C (even with the previously mentioned similarity measures M_{SIMAB} and M_{SIMCD}), the rationale being that any data received over channels C and D will be given less weight at the UE 10 as compared to data received over signals A and B due to inferior channel quality.

An SRS signalling sequence as illustrated in Figure 3e may thus be envisaged, where SRS_{A} is sent three times during period T, while SRSc only is sent once during the same period.

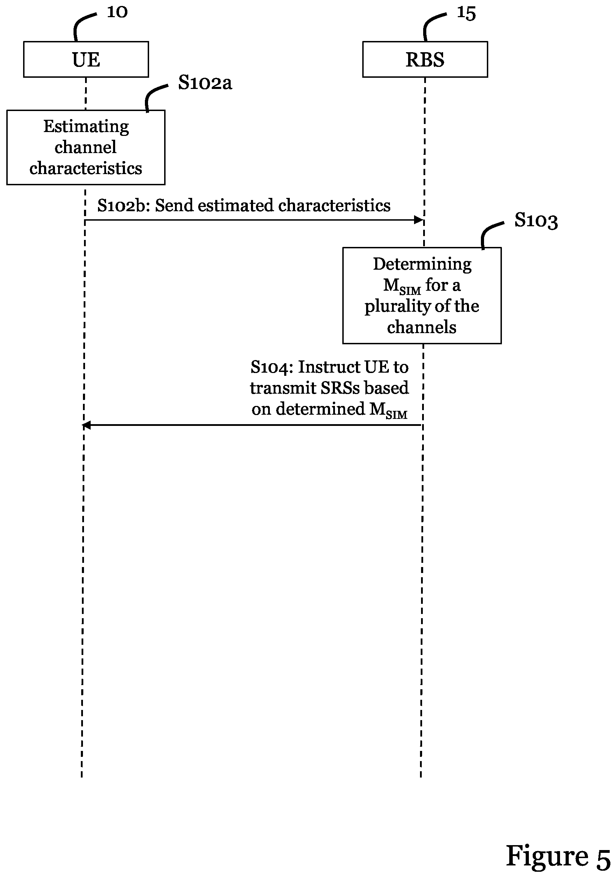

Figure 5 illustrates a signalling diagram according to an embodiment where the UE 10 performs the estimation of channel characteristics and sends the result to the RBS 15 for determining the SRS sequence.

Thus, in a first step S102a, the UE 10 estimates characteristics of the communication channel A, B, C, D established via the respective antenna 11-14 based on signals received via the antennas and sends an indication of the estimated characteristics to the RBS 15 in step S102b.

Similar to the previously described embodiment of Figure 2, the RBS 15 determines in step S103 a measure of similarity M_{SIM} in the estimated communication channel characteristic of at least two of the plurality of antennas. For instance, the RBS 15 may determine that the characteristics of channel A established via the first antenna 11 is similar to the characteristics of channel B established via the second antenna 12.

As is understood, the UE 10 may determine the measure of similarity M_{SIM} in the estimated communication channel characteristic and send result to the RBS 15, in which case step S103 is performed at the UE 10 rather than at the RBS 15.

In this exemplifying embodiment, it is assumed that the characteristics of channel A and channel B has a similarity measure of M_{SIMAB} = 0.9, and that the similarity in characteristics of channel C via the third antenna 13 and channel D via the fourth antenna 14 also is high, in this M_{SIMCD} = 0.88. The RBS 15 further determines that the similarity measure for channels A and C is low.

From these determined similarity measures, the RBS 15 concludes that the characteristics of channels A-B are similar, as are the characteristics of channels C-D, while there is little similarity between any one of channels A-B compared to any one of channels C-D.

The RBS 15 will apply this conclusion by instructing the UE 10 in step S104 to send an SRS either on channel A-B (but not both), and either on channel C-D (but not both), at least for a given time period, as previously described.

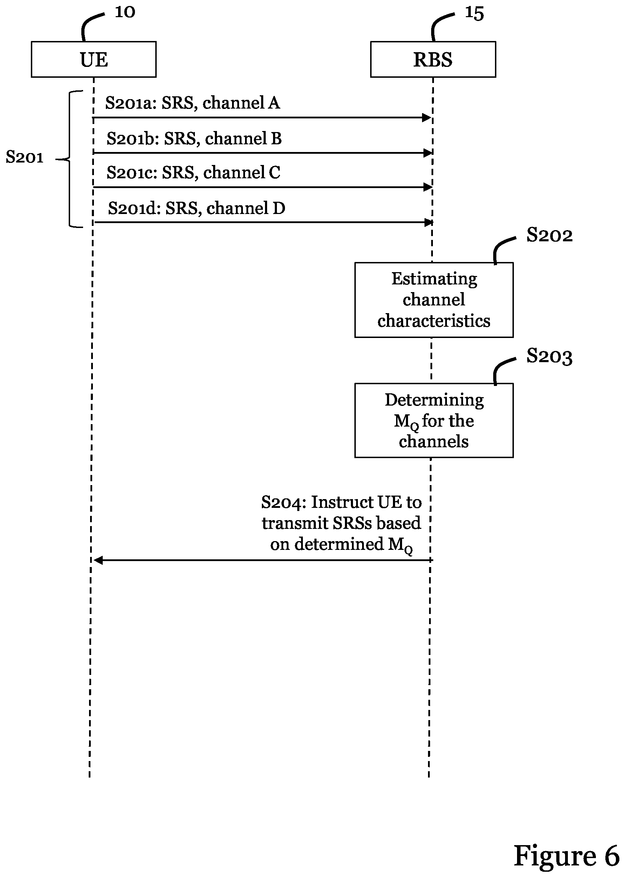

Figure 6 shows a signalling diagram illustrating a method of the RBS 15 controlling transmission of SRSs from the UE 10 according to another embodiment.

In a first step S201, the RBS 15 receives an SRS from each antenna 11-14, based on which received SRS the RBS 15 in step S202 estimates characteristics of the communication channel A, B, C, D established via the respective antenna 11-14.

In step S203, the RBS 15 determines a measure of channel quality M_{Q} from the estimated communication channel characteristic for at least two of the plurality of antennas. For instance, the RBS 15 may determine that the quality of channel A established via the first antenna 11 is high while that of the remaining channels B, C and D established via antennas 12-14 is low in terms of e.g. channel gain, SINR or similar.

For example, it may be envisaged that M_{QA} = 0.9 while M_{QB} = 0.1, M_{QC} = 0.2 and M_{QD} = 0.1, where a value of 1 indicates high quality and o low quality.

Further, it is assumed that in case the determined channel quality measure M_{Q} exceeds a predetermined channel quality threshold vale T_{Q}, the quality of the channel is considered sufficiently high. For instance, T_{SIM} = 0.8, which indicates that only the quality of channel A is currently sufficiently high for an SRS to be sent.

The RBS 15 will thus instruct the UE 10 in step S204 to send an SRS only on channel A, at least for a given time period. For instance, the following SRS sequence may be sent:
A-A-A-A-B-C-D-A-A-A-A...

If any one of channels B, C and D (for which an SRS is occasionally sent to determine channel quality) indicates a quality exceeding the channel quality threshold vale T_{Q}, an SRS will regularly be sent on that channel as well, for instance channel B:
A-B-A-B-C-D-A-B-A-B....

Advantageously, SRS signals are only sent on channels presenting a sufficiently high quality, such that SRSs are not unnecessarily sent on channels which does not have sufficient quality for the RBS 15 to attain required channel information.

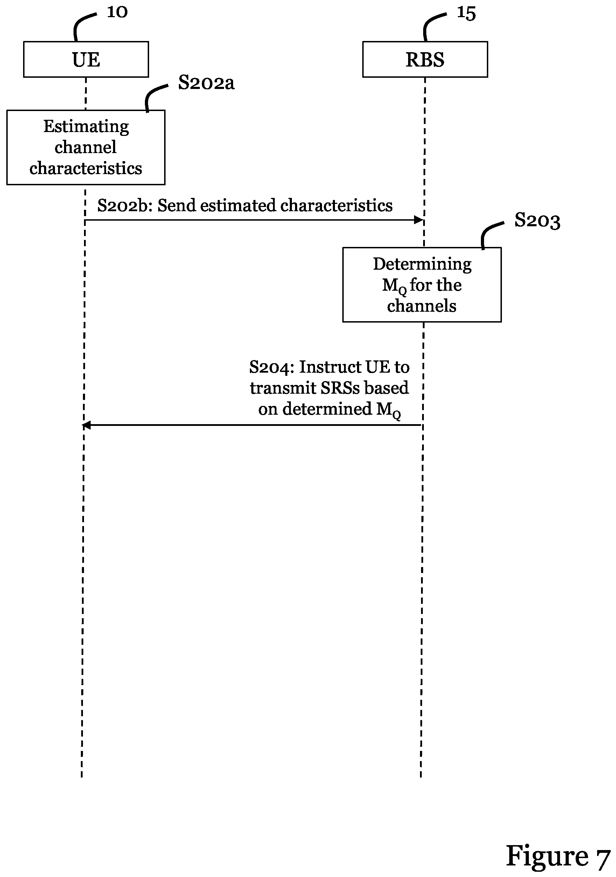

Figure 7 shows a signalling diagram illustrating a method of the RBS 15 controlling transmission of SRSs from the UE 10 according to another embodiment.

In a first step S202a, the UE 10 estimates characteristics of the communication channel A, B, C, D established via the respective antenna 11-14 based on signals received via the antennas and sends an indication of the estimated characteristics to the RBS 15 in step S202b.

Similar to the previously described embodiment of Figure 6, the RBS 15 determines in step S203 a measure of channel quality M_{Q} from the estimated communication channel characteristic for at least two of the plurality of antennas. For instance, the RBS 15 may determine that the quality of channel A established via the first antenna 11 is high while that of the remaining channels B, C and D established via antennas 12-14 is low.

As is understood, the UE 10 may determine the measure of similarity M_{SIM} in the estimated communication channel characteristic and send result to the RBS 15, in which case step S203 is performed at the UE 10 rather than at the RBS 15.

The RBS 15 will as previously described thus instruct the UE 10 in step S204 to send an SRS only on channel A, at least for a given time period.

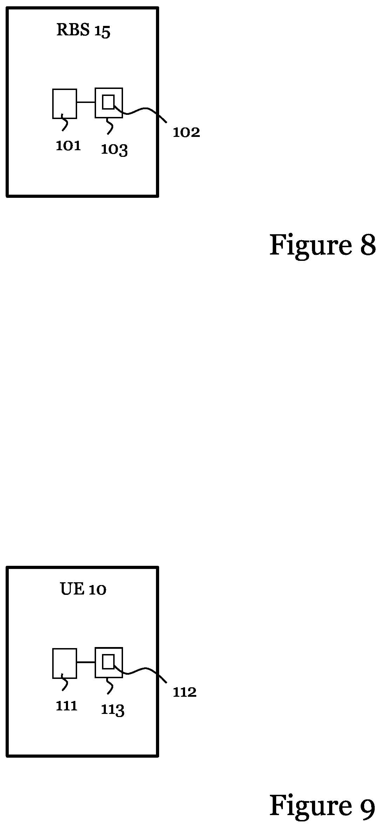

Figure 8 illustrates an RBS 15 configured to control sending of reference signals from a UE according to an embodiment. The steps of the method performed by the RBS 15 are in practice performed by a processing unit 101 embodied in the form of one or more microprocessors arranged to execute a computer program 102 downloaded to a suitable storage volatile medium 103 associated with the microprocessor, such as a Random Access Memory (RAM), or a non-volatile storage medium such as a Flash memory or a hard disk drive. The processing unit 101 is arranged to cause the RBS 15 to carry out the method according to embodiments described herein, when the appropriate computer program 102 comprising computer-executable instructions is downloaded to the storage medium 103 and executed by the processing unit 101. The storage medium 103 may also be a computer program product comprising the computer program 102. Alternatively, the computer program 102 may be transferred to the storage medium 103 by means of a suitable computer program product, such as a Digital Versatile Disc (DVD) or a memory stick. As a further alternative, the computer program 102 may be downloaded to the storage medium 103 over a network. The processing unit 101 may alternatively be embodied in the form of a digital signal processor (DSP), an application specific integrated circuit (ASIC), a field-programmable gate array (FPGA), a complex programmable logic device (CPLD), etc.

Figure 9 illustrates a UE 10 configured to control sending of reference signals from the UE according to an embodiment. The steps of the method performed by the UE 10 are in practice performed by a processing unit 111 embodied in the form of one or more microprocessors arranged to execute a computer program 112 downloaded to a suitable storage volatile medium 113 associated with the microprocessor, such as a RAM, or a non-volatile storage medium such as a Flash memory or a hard disk drive. The processing unit 111 is arranged to cause the UE 10 to carry out the method according to embodiments described herein, when the appropriate computer program 112 comprising computer-executable instructions is downloaded to the storage medium 113 and executed by the processing unit 111. The storage medium 113 may also be a computer program product comprising the computer program 112. Alternatively, the computer program 112 may be transferred to the storage medium 113 by means of a suitable computer program product, such as a DVD or a memory stick. As a further alternative, the computer program 112 may be downloaded to the storage medium 113 over a network. The processing unit 111 may alternatively be embodied in the form of a DSP, an ASIC, an FPGA, a CPLD, etc.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of a radio base station (15) of controlling sending of reference signals from a wireless communication device (10), comprising:
determining (S103), from an estimated characteristic of a communication channel established via each of a plurality of antennas (11-14) of the wireless communication device (10), a measure of similarity in the estimated characteristics for at least two of the communication channels; and if the similarity exceeds a similarity threshold value:
instructing (S104) the wireless communication device (10) to send further reference signals only on one of said at least two communication channels during a time period;
receiving (S105) the further reference signals that the wireless communication device (10) was instructed to send;
estimating (S106), from the received further reference signals of said one of the at least two communication channels, the characteristic of each of said at least two communication channels; and
selecting (S107) a downlink configuration for each of said at least two communication channels based on the estimation.

2. The method of claim 1, further comprising:
receiving (S101), from the wireless communication device (10), a reference signal transmitted via each of the plurality of antennas (11-14); and
estimating (S102), from the received reference signals, the characteristic of the communication channel established via each of the plurality of antennas (11-14).

3. The method of claim 1, further comprising:
receiving (S102b), from the wireless communication device (10), an estimate of the characteristic of the communication channel established via each of the plurality of antennas (11-14).

4. The method of any one of the preceding claims, wherein the estimated communication channel characteristic comprises channel state information, CSI.

5. The method according to any one of the preceding claims, where the measure of similarity is based on covariance between one or more communication channel characteristics.

6. The method of any one of the preceding claims, wherein the determining (S103) of a measure of similarity in the estimated characteristics for at least two of the communication channels comprises:
determining that at least two sets of communication channels comprise channels where the similarity exceeds a similarity threshold value for the channels in each set; and the instructing (S104) of the wireless communication device (10) to send further reference signals comprises:
instructing (S104) the wireless communication device (10) to send the further reference signals, for each set of communication channels, only on one of the communication channels in each set during a time period.

7. The method of claim 6, wherein the instructing (S104) of the wireless communication device (10) to send the reference signals further comprises:
instructing the wireless communication device (10) to send the further reference signals more often via a communication channel having a higher channel quality.

8. A radio base station (15) configured to control sending of reference signals from a wireless communication device (10), the radio base station (15) comprising a processing unit (101) and a memory (103), said memory containing instructions (102) executable by said processing unit (101), whereby the radio base station (15) is operative to:
determine, from an estimated characteristic of a communication channel established via each of a plurality of antennas (11-14) of the wireless communication device (10), a measure of similarity in the estimated characteristics for at least two of the communication channels; and if the similarity exceeds a similarity threshold value:
instruct the wireless communication device (10) to send further reference signals only on one of said at least two communication channels during a time period;
receive the further reference signals that the wireless communication device (10) was instructed to send;
estimate, from the received further reference signals of said one of the at least two communication channels, the characteristic of each of said at least two communication channels; and
select a downlink configuration for each of said at least two communication channels based on the estimation.

9. The radio base station (15) of claim 8, further being operative to:
receive, from the wireless communication device (10), a reference signal transmitted via each of the plurality of antennas (11-14); and
estimate, from the received reference signals, the characteristic of the communication channel established via each of the plurality of antennas (11-14).

10. The radio base station (15) of claim 8, further being operative to:
receive, from the wireless communication device (10), an estimate of the characteristic of the communication channel established via each of the plurality of antennas (11-14).

11. The radio base station (15) of any one of claims 8-10, wherein the estimated communication channel characteristic comprises channel state information, CSI.

12. The radio base station (15) of any one of claims 8-11, where the measure of similarity is based on covariance between one or more communication channel characteristics.

13. The radio base station (15) of any one of claims 8-12, further being operative to, when determining a measure of similarity in the estimated characteristics for at least two of the communication channels:
determine that at least two sets of communication channels comprise channels where the similarity exceeds a similarity threshold value for the channels in each set; and to, when instructing the wireless communication device (10) to send further reference signals:
instruct the wireless communication device (10) to send the further reference signals, for each set of communication channels, only on one of the communication channels in each set during a time period.

14. The radio base station (15) of claim 13, further being operative to, when instructing the wireless communication device (10) to send the reference signals:
instruct the wireless communication device (10) to send the further reference signals more often via a communication channel having a higher channel quality.

## Patentansprüche

1. Verfahren einer Funkbasisstation (15) zur Steuerung des Sendens von Referenzsignalen von einer drahtlosen Kommunikationsvorrichtung (10), umfassend:
Bestimmen (S103) aus einer geschätzten Charakteristik eines Kommunikationskanals, der über jede einer Mehrzahl von Antennen (11-14) der drahtlosen Kommunikationsvorrichtung (10) aufgebaut wird, eines Ähnlichkeitsmaßes der geschätzten Charakteristiken für mindestens zwei der Kommunikationskanäle; und, falls die Ähnlichkeit einen Ähnlichkeitsschwellenwert überschreitet:
Anweisen (S104) der drahtlosen Kommunikationsvorrichtung (10), weitere Referenzsignale während eines Zeitraums nur auf einem der mindestens zwei Kommunikationskanäle zu senden;
Empfangen (S105) der weiteren Referenzsignale, die zu senden die drahtlose Kommunikationsvorrichtung (10) angewiesen wurde;
Schätzen (S106) der Charakteristik jedes der mindestens zwei Kommunikationskanäle aus den empfangenen weiteren Referenzsignale des einen der mindestens zwei Kommunikationskanäle; und
Auswählen (S107) einer Downlink-Konfiguration für jeden der mindestens zwei Kommunikationskanäle basierend auf der Schätzung.

2. Verfahren nach Anspruch 1, ferner umfassend:
Empfangen (S101) eines über jede der Mehrzahl von Antennen (11-14) übertragenen Referenzsignals von der drahtlosen Kommunikationsvorrichtung (10); und
Schätzen (S102) der Charakteristik des über jede der Mehrzahl von Antennen (11-14) aufgebauten Kommunikationskanals aus den empfangenen Referenzsignalen.

3. Verfahren nach Anspruch 1, ferner umfassend:
Empfangen (S102b) einer Schätzung der Charakteristik des über jede der Mehrzahl von Antennen (11-14) aufgebauten Kommunikationskanals von der drahtlosen Kommunikationsvorrichtung (10).

4. Verfahren nach einem der vorhergehenden Ansprüche, wobei die geschätzte Kommunikationskanalcharakteristik Kanalzustandsinformationen, CSI, umfasst.

5. Verfahren nach einem der vorhergehenden Ansprüche, wobei das Ähnlichkeitsmaß auf einer Kovarianz zwischen einer oder mehreren Kommunikationskanalcharakteristiken basiert.

6. Verfahren nach einem der vorhergehenden Ansprüche, wobei das Bestimmen (S103) eines Ähnlichkeitsmaßes der geschätzten Charakteristiken für mindestens zwei der Kommunikationskanäle Folgendes umfasst:
Bestimmen, dass mindestens zwei Sätze von Kommunikationskanälen Kanäle umfassen, bei denen die Ähnlichkeit einen Ähnlichkeitsschwellenwert für die Kanäle in jedem Satz überschreitet; und das Anweisen (S104) der drahtlosen Kommunikationsvorrichtung (10), weitere Referenzsignale zu senden, Folgendes umfasst:
Anweisen (S104) der drahtlosen Kommunikationsvorrichtung (10), die weiteren Referenzsignale für jeden Satz von Kommunikationskanälen während eines Zeitraums nur auf einem der Kommunikationskanäle in jedem Satz zu senden.

7. Verfahren nach Anspruch 6, wobei das Anweisen (S104) der drahtlosen Kommunikationsvorrichtung (10), die Referenzsignale zu senden, ferner Folgendes umfasst:
Anweisen der drahtlosen Kommunikationsvorrichtung (10), die weiteren Referenzsignale häufiger über einen Kommunikationskanal mit einer höheren Kanalqualität zu senden.

8. Funkbasisstation (15), die dazu ausgelegt ist, das Senden von Referenzsignalen von einer drahtlosen Kommunikationsvorrichtung (10) zu steuern, wobei die Funkbasisstation (15) eine Verarbeitungseinheit (101) und einen Speicher (103) umfasst, wobei der Speicher Anweisungen (102) enthält, die von der Verarbeitungseinheit (101) ausgeführt werden können, wobei die Funkbasisstation (15) zu Folgendem ausgelegt ist:
Bestimmen aus einer geschätzten Charakteristik eines Kommunikationskanals, der über jede einer Mehrzahl von Antennen (11-14) der drahtlosen Kommunikationsvorrichtung (10) aufgebaut wird, eines Ähnlichkeitsmaßes der geschätzten Charakteristiken für mindestens zwei der Kommunikationskanäle; und, falls die Ähnlichkeit einen Ähnlichkeitsschwellenwert überschreitet:
Anweisen der drahtlosen Kommunikationsvorrichtung (10), weitere Referenzsignale während eines Zeitraums nur auf einem der mindestens zwei Kommunikationskanäle zu senden;
Empfangen der weiteren Referenzsignale, die zu senden die drahtlose Kommunikationsvorrichtung (10) angewiesen wurde;
Schätzen der Charakteristik jedes der mindestens zwei Kommunikationskanäle aus den empfangenen weiteren Referenzsignale des einen der mindestens zwei Kommunikationskanäle; und
Auswählen einer Downlink-Konfiguration für jeden der mindestens zwei Kommunikationskanäle basierend auf der Schätzung.

9. Funkbasisstation (15) nach Anspruch 8, die ferner zu Folgendem ausgelegt ist:
Empfangen eines über jede der Mehrzahl von Antennen (11-14) übertragenen Referenzsignals von der drahtlosen Kommunikationsvorrichtung (10); und
Schätzen der Charakteristik des über jede der Mehrzahl von Antennen (11-14) aufgebauten Kommunikationskanals aus den empfangenen Referenzsignalen.

10. Funkbasisstation (15) nach Anspruch 8, die ferner zu Folgendem ausgelegt ist:
Empfangen einer Schätzung der Charakteristik des über jede der Mehrzahl von Antennen (11-14) aufgebauten Kommunikationskanals von der drahtlosen Kommunikationsvorrichtung (10).

11. Funkbasisstation (15) nach einem der Ansprüche 8-10, wobei die geschätzte Kommunikationskanalcharakteristik Kanalzustandsinformationen, CSI, umfasst.

12. Funkbasisstation (15) nach einem der Ansprüche 8-11, wobei das Ähnlichkeitsmaß auf einer Kovarianz zwischen einer oder mehreren Kommunikationskanalcharakteristiken basiert.

13. Funkbasisstation (15) nach einem der Ansprüche 8-12, die beim Bestimmen eines Ähnlichkeitsmaßes der geschätzten Charakteristiken für mindestens zwei der Kommunikationskanäle ferner zu Folgendem ausgelegt ist:
Bestimmen, dass mindestens zwei Sätze von Kommunikationskanälen Kanäle umfassen, bei denen die Ähnlichkeit einen Ähnlichkeitsschwellenwert für die Kanäle in jedem Satz überschreitet; und beim Anweisen der drahtlosen Kommunikationsvorrichtung (10), weitere Referenzsignale zu senden:
Anweisen der drahtlosen Kommunikationsvorrichtung (10), die weiteren Referenzsignale für jeden Satz von Kommunikationskanälen während eines Zeitraums nur auf einem der Kommunikationskanäle in jedem Satz zu senden.

14. Funkbasisstation (15) nach Anspruch 13, die beim Anweisen der drahtlosen Kommunikationsvorrichtung (10), die Referenzsignale zu senden, ferner zu Folgendem ausgelegt ist:
Anweisen der drahtlosen Kommunikationsvorrichtung (10), die weiteren Referenzsignale häufiger über einen Kommunikationskanal mit einer höheren Kanalqualität zu senden.

## Revendications

1. Procédé d'une station de base radio (15) pour commander l'envoi de signaux de référence depuis un dispositif de communication sans fil (10), comprenant :
la détermination (S103), à partir d'une caractéristique estimée d'un canal de communication établi via chacune d'une pluralité d'antennes (11-14) du dispositif de communication sans fil (10), d'une mesure de similarité des caractéristiques estimées pour au moins deux des canaux de communication ; et si la similarité dépasse une valeur seuil de similarité :
l'instruction (S104) au dispositif de communication sans fil (10) d'envoyer d'autres signaux de référence uniquement sur un desdits au moins deux canaux de communication au cours d'une période de temps ;
la réception (S105) des autres signaux de référence que le dispositif de communication sans fil (10) a été instruit d'envoyer ;
l'estimation (S106), à partir des autres signaux de référence reçus dudit un des au moins deux canaux de communication, de la caractéristique de chacun desdits au moins deux canaux de communication ; et
la sélection (S107) d'une configuration de liaison descendante pour chacun desdits au moins deux canaux de communication sur la base de l'estimation.

2. Procédé selon la revendication 1, comprenant en outre :
la réception (S101), depuis le dispositif de communication sans fil (10), d'un signal de référence transmis via chacune de la pluralité d'antennes (11-14) ; et
l'estimation (S102), à partir des signaux de référence reçus, de la caractéristique du canal de communication établi via chacune de la pluralité d'antennes (11-14).

3. Procédé selon la revendication 1, comprenant en outre :
la réception (S102b), depuis le dispositif de communication sans fil (10), d'une estimation de la caractéristique du canal de communication établi via chacune de la pluralité d'antennes (11-14).

4. Procédé selon l'une quelconque des revendications précédentes, dans lequel la caractéristique de canal de communication estimée comprend des informations d'état de canal, CSI.

5. Procédé selon l'une quelconque des revendications précédentes, dans lequel la mesure de similarité est basée sur une covariance entre une ou plusieurs caractéristiques de canal de communication.

6. Procédé selon l'une quelconque des revendications précédentes, dans lequel la détermination (S103) d'une mesure de similarité des caractéristiques estimées pour au moins deux des canaux de communication comprend :
la détermination qu'au moins deux ensembles de canaux de communication comprennent des canaux où la similarité dépasse une valeur seuil de similarité pour les canaux dans chaque ensemble ; et l'instruction (S104) au dispositif de communication sans fil (10) d'envoyer d'autres signaux de référence comprend :
l'instruction (S104) au dispositif de communication sans fil (10) d'envoyer les autres signaux de référence, pour chaque ensemble de canaux de communication, uniquement sur un des canaux de communication dans chaque ensemble au cours d'une période de temps.

7. Procédé selon la revendication 6, dans lequel l'instruction (S104) au dispositif de communication sans fil (10) d'envoyer les signaux de référence comprend en outre :
l'instruction au dispositif de communication sans fil (10) d'envoyer les autres signaux de référence plus souvent via un canal de communication présentant une qualité de canal supérieure.

8. Station de base radio (15) configurée pour commander l'envoi de signaux de référence depuis un dispositif de communication sans fil (10), la station de base radio (15) comprenant une unité de traitement (101) et une mémoire (103), ladite mémoire contenant des instructions (102) exécutables par ladite unité de traitement (101), selon lesquelles la station de base radio (15) est fonctionnelle pour :
déterminer, à partir d'une caractéristique estimée d'un canal de communication établi via chacune d'une pluralité d'antennes (11-14) du dispositif de communication sans fil (10), une mesure de similarité des caractéristiques estimées pour au moins deux des canaux de communication ; et si la similarité dépasse une valeur seuil de similarité :
instruire au dispositif de communication sans fil (10) d'envoyer d'autres signaux de référence uniquement sur un desdits au moins deux canaux de communication au cours d'une période de temps ;
recevoir les autres signaux de référence que le dispositif de communication sans fil (10) a été instruit d'envoyer ;
estimer, à partir des autres signaux de référence reçus dudit un des au moins deux canaux de communication, la caractéristique de chacun desdits au moins deux canaux de communication ; et
sélectionner une configuration de liaison descendante pour chacun desdits au moins deux canaux de communication sur la base de l'estimation.

9. Station de base radio (15) selon la revendication 8, étant en outre fonctionnelle pour :
recevoir, depuis le dispositif de communication sans fil (10), un signal de référence transmis via chacune de la pluralité d'antennes (11-14) ; et
estimer, à partir des signaux de référence reçus, la caractéristique du canal de communication établi via chacune de la pluralité d'antennes (11-14).

10. Station de base radio (15) selon la revendication 8, étant en outre fonctionnelle pour :
recevoir, depuis le dispositif de communication sans fil (10), une estimation de la caractéristique du canal de communication établi via chacune de la pluralité d'antennes (11-14).

11. Station de base radio (15) selon l'une quelconque des revendications 8 à 10, dans laquelle la caractéristique de canal de communication estimée comprend des informations d'état de canal, CSI.

12. Station de base radio (15) selon l'une quelconque des revendications 8 à 11, dans laquelle la mesure de similarité est basée sur une covariance entre une ou plusieurs caractéristiques de canal de communication.

13. Station de base radio (15) selon l'une quelconque des revendications 8 à 12, étant en outre fonctionnelle pour, lors de la détermination d'une mesure de similarité des caractéristiques estimées pour au moins deux des canaux de communication :
déterminer qu'au moins deux ensembles de canaux de communication comprennent des canaux où la similarité dépasse une valeur seuil de similarité pour les canaux dans chaque ensemble ; et pour, lors de l'instruction au dispositif de communication sans fil (10) d'envoyer d'autres signaux de référence :
instruire au dispositif de communication sans fil (10) d'envoyer les autres signaux de référence, pour chaque ensemble de canaux de communication, uniquement sur un des canaux de communication dans chaque ensemble au cours d'une période de temps.

14. Station de base radio (15) selon la revendication 13, étant en outre fonctionnelle pour, lors de l'instruction au dispositif de communication sans fil (10) d'envoyer les signaux de référence :
instruire au dispositif de communication sans fil (10) d'envoyer les autres signaux de référence plus souvent via un canal de communication présentant une qualité de canal supérieure.
